(19) **Europäisches Patentamt / European Patent Office / Office européen des brevets**

(11) **EP 2 942 637 B1**

(12) **EUROPEAN PATENT SPECIFICATION**

(45) Date of publication and mention of the grant of the patent:
**27.12.2017 Bulletin 2017/52**

(51) Int Cl.:
**G01S 7/02** *(2006.01)*     **G01S 13/90** *(2006.01)*

(21) Application number: **15165372.2**

(22) Date of filing: **28.04.2015**

(54) **CHANGE DETECTION DEVICE, CHANGE DETECTION METHOD AND RECORDING MEDIUM**

ÄNDERUNGSDETEKTIONSVORRICHTUNG, ÄNDERUNGSDETEKTIONSVERFAHREN UND AUFZEICHNUNGSMEDIUM

DISPOSITIF ET PROCÉDÉ DE DÉTECTION DE CHANGEMENT, ET SUPPORT D'ENREGISTREMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.05.2014 JP 2014097643**

(43) Date of publication of application:
**11.11.2015 Bulletin 2015/46**

(73) Proprietor: **NEC Corporation Minato-ku, Tokyo 108-8001 (JP)**

(72) Inventor: **MURATA, Minoru Tokyo, 108-8001 (JP)**

(74) Representative: **Vossius & Partner Patentanwälte Rechtsanwälte mbB Siebertstrasse 3 81675 München (DE)**

(56) References cited:
- **MENG LIU ET AL: "Change detection of polarimetric SAR images applied to specific land cover type", GEOSCIENCE AND REMOTE SENSING SYMPOSIUM (IGARSS), 2012 IEEE INTERNATIONAL, IEEE, 22 July 2012 (2012-07-22), pages 6329-6332, XP032470117, DOI: 10.1109/IGARSS.2012.6352707 ISBN: 978-1-4673-1160-1**
- **ALIPOUR SAMIRA ET AL: "Short-Term Surface Deformation on the Northern Hayward Fault, CA, and Nearby Landslides Using Polarimetric SAR Interferometry (PolInSAR)", PURE AND APPLIED GEOPHYSICS, BIRKHAEUSER VERLAG, BASEL, CH, vol. 172, no. 8, 10 December 2013 (2013-12-10), pages 2179-2193, XP035521057, ISSN: 0033-4553, DOI: 10.1007/S00024-013-0747-X [retrieved on 2013-12-10]**
- **VICTOR D NAVARRO-SANCHEZ ET AL: "A Contribution of Polarimetry to Satellite Differential SAR Interferometry: Increasing the Number of Pixel Candidates", IEEE GEOSCIENCE AND REMOTE SENSING LETTERS, IEEE SERVICE CENTER, NEW YORK, NY, US, vol. 7, no. 2, 1 April 2010 (2010-04-01), pages 276-280, XP011332622, ISSN: 1545-598X, DOI: 10.1109/LGRS.2009.2033013**

**Description**

**TECHNICAL FIELD**

The present invention relates to a change detection device, a change detection method and a change detecting program for detecting a change of the ground surface or an object, and more particularly, to a change detection device, a change detection method and a change detecting program for detecting a change of the ground surface or an object using PS-InSAR techniques.

**BACKGROUND ART**

One of the techniques for calculating a change of the ground surface or an object is a technique called PS-InSAR (Permanent/Persistent Scatters Interferometric Synthetic Aperture Radar) (e.g. Non-Patent Document 1 and Non-Patent Document 2). PS-InSAR is a technique for measuring displacement at a point on the ground surface or a certain object by applying interferometry to SAR data which is data obtained with respect to a point having PS (Permanent/Persistent Scatters) properties by a synthetic aperture radar (SAR). Radio waves have a characteristic of allowing their observation irrespective of weather or even at night because they pass through clouds or rain unlike light waves. In the following, a point on the ground surface or on an object whose displacement is to be measured in PS-InSAR will be referred to as a measuring point. Each point on the ground surface or on an object corresponds to each resolution cell in a field of vision for image capturing of the synthetic aperture radar.

Here, PS properties are properties in which a radio wave scattering characteristic is not changed with a lapse of time. While plants or waves are among those not having PS properties, most of artificial structures have PS properties at numbers of places thereof. In PS-InSAR, however, use of a certain place as a measuring point requires a certain degree of backscattering intensity (hereinafter referred to as reflection intensity) in addition to PS properties. This is because when a reflection intensity is low, signals may be buried in noise. Such a limitation on measuring points decreases the advantage of PS-InSAR.

It is known that for example, at a point having such a shape as a single flat board, backscattering is so weak that even if it has PS properties, the point is less likely to be considered as a measuring point. It is also known that for example, at a point having such a shape made of three square or rectangular equilateral triangle plates joined together so as to be opposed to each other at right angles as used in a corner reflector (CR) (e.g. four corners of a window frame), backscattering is easily returned, so that such a point is appropriate as a measuring point.

As a technique related to the present invention, for example, Patent Document 1 recites that a ground reference point device configured mainly with an active type reflector such as an active reflector is disposed within a field of vision for image capturing of a synthetic aperture radar in order to facilitate selection of a ground reference point in fine geometrical correction of a synthetic aperture radar image (SAR image).

For example, Patent Document 2 recites a technique of storing, in a storage device in advance, a result as polarization property data for each measuring position, which result is obtained by measuring at least three kinds of polarization components among scattered waves obtained from a plurality of reflected radio waves having different polarization properties and determining whether an object at each measuring position is an artifact or not using the stored polarization property data.

For example, Non-Patent Document 3 recites that pseudo color composite display of full polarimetric SAR image data is executed, with a set of three polarizations (e.g. HH polarization, HV polarization and VV polarization) associated with red, green and blue, each set having four kinds of data whose values are different from each other. The four kinds of data are assumed to be backscattering coefficients of full polarimetric SAR image data, including an ellipse orientation angle $\psi_r$ of a reception polarization, an ellipticity angle $\chi_r$ of a reception polarization, an ellipse orientation angle $\psi_t$ of a transmission polarization and an ellipticity angle $\chi_r$ of a transmission polarization. Non-Patent Document 3 also discloses, as one of application examples of full polarimetric SAR image data, an example where a transmission and reception condition that attains the highest contrast between two target objects is obtained and based on the condition, a specific target object to be identified and another target object are displayed such that a ratio of a pixel value of the specific target to that of another target is the highest. Patent Document 3 also discloses polarization rotation processing executed using full polarimetric SAR image data. Patent Document 4 discloses executing polarization rotation processing using full polarimetric SAR image data and extracting a pixel corresponding to a designated representative value as a representative pixel and reproducing the same as one SAR image.

[Citation List]

[Patent Literature]

[PTL 1] Japanese Laid-open Patent Publication No. 2001-91650
[PTL 2] Japanese Patent No. 5305985
[PTL 3] Japanese Laid-open Patent Publication No. 2008-14735
[PTL 4] Japanese Laid-open Patent Publication No. 2008-232626

[Non-Patent Literature]

[NPL 1] Alessandro Ferretti, Claudio Prati, and Fabio Rocca, "Nonlinear Subsidence Rate Estimation Using Permanent Scatterers in Differential SAR Interferometry", IEEE TRANSACTION ON GEOSCIENCE AND REMOTE SENSING, VOL.38, No.5, Sep 2000.
[NPL 2] Alessandro Ferretti, Claudio Prati, and Fabio Rocca, "Permanent Scatterers in SAR Interferometry", IEEE TRANSACTION ON GEOSCIENCE AND REMOTE SENSING, VOL.39, No.1, Jan 2001.
[NPL 3] Tetsuya JITSUFUCHI, "Feasibility of the Multi Frequency, Full Polarimetric SAR Image Data as a Disaster Observation Technique Verified by Ground Truth Data and Optical Sensor Image Data", Study Report of National Research Institute for Earth Science and Disaster Prevention, VOL.63, June 2002.

XP032470117 describes change detection of polarimetric SAR images applied to specific land cover type.

## SUMMARY

[Technical Problem]

In actual PS-InSAR processing, displacement at a point (hereinafter referred to as a spot) on the ground surface or on an object is measured using only an SAR image in a predetermined polarization direction. Specifically, one combination of transmission and reception polarizations is selected from representative transmission and reception polarizations, i.e. an HH polarization, an HV polarization, a VH polarization and a VV polarization, and as many SAR images formed of the selected combination of transmission and reception polarizations are acquired as the number of a plurality of times before and after a period when a change is to be detected, thereby executing arithmetic processing for detecting a change.

An H (Horizontal) polarization represents a horizontal polarization, i.e. a polarization having a polarization direction, which is an electric field oscillating direction, in parallel to a horizontal plane. A V (Vertical) polarization represents a vertical polarization, i.e. a polarization having a polarization direction vertical to the horizontal plane. The first alphabet of a transmission and reception polarization combination represents a polarization direction for transmission and the second alphabet represents a polarization direction for reception. Accordingly, an HH polarization represents transmitting horizontal polarization radio waves and receiving horizontal polarization radio waves. An HV polarization represents transmitting horizontal polarization radio waves and receiving vertical polarization radio waves. A VH polarization represents transmitting vertical polarization radio waves and receiving horizontal polarization radio waves. A VV polarization represents transmitting vertical polarization radio waves and receiving vertical polarization radio waves.

In general, when electromagnetic waves in a certain polarization direction are radiated onto a certain spot and reflected and returned from a structure at the spot, the polarization direction might be rotated depending on a shape, a material or the like of the structure at the spot. A rotation angle of the polarization then differs with a shape, a material or the like of the structure, so that it is difficult to predict the rotation angle in advance.

In a case of measuring long-term deterioration caused by distortion, peeling and the like of a wide range of artificial structures such as roads, railways and bridges by detecting a subtle change at a PS point, there occurs a problem that satisfactorily high measurement accuracy cannot be obtained using only an SAR image obtained by one combination of transmission and reception polarizations because the number of measurable points is too small. This is because although a suitable combination of transmission and reception polarizations varies with each place, when only an SAR image obtained by one transmission and reception polarization combination is used, even if there is a point having a high reflection intensity from which an SAR image formed of another combination of transmission and reception polarizations is obtained, the point cannot be used as a measuring point.

Disposing such ground reference point devices as recited in Patent Document 1 at positions where a change is to be sensed enables measurement of displacement at spots where the ground reference point devices are disposed by strong reflection from these ground reference point devices. However, considering application of the device to a deterioration analysis of artificial structures, it is difficult to set such a ground reference point device at an arbitrary place of an artificial structure for a long period of time and even if the device can be disposed, it requires considerable cost.

The technique recited in Patent Document 2, in which polarization property data as a result obtained by measuring at least three kinds of polarization components at each measuring position is used in order to discriminate artifacts from natural objects by an analysis of scattering components, fails to consider how to detect displacement at as many spots allowing displacement measurement as possible using polarization property data or detect such spots without missing them.

The technique recited in Non-Patent Document 3 is directed to determine how a backscattering intensity differs due to three kinds of polarization components by a hue, or to emphasizedly display a difference between substances having different scattering mechanisms on images. No consideration is given thereto how to detect as many spots allowing displacement measurement as possible or detect such spots without missing them by using a backscattering coefficient.

It is assumed that an increase in the number of spots at which displacement measurement is possible will improve change detection sensitivity, thereby contributing to an increase in detection accuracy.

An exemplary object of the present invention is therefore to provide an observation system capable of detecting a change with high sensitivity, a change detection device, a change detection method, a measuring point increasing method and a program thereof. It is to be noted that the object is only one of a plurality of objects that exemplary embodiments disclosed in the present specification intend to attain. Other objects or problems and novel characteristics will become apparent from the following description or accompanying drawings of the present specification.

[Solution to Problem]

The change detection device according to the present invention is defined in claim 1.

The change detection method according to the present invention is defined in claim 8.

The non-transitory computer-readable medium according to the present invention is defined in claim 9.

[Advantageous Effect of Invention]

According to aspects of the present invention, since as many spots allowing displacement measurement as possible can be detected or such spots can be detected without missing them, changes can be detected with high sensitivity.

**BRIEF DESCRIPTION OF THE DRAWINGS**

Fig. 1 is a diagram illustrating a configuration example of an observation system of a first exemplary embodiment;

Fig. 2 is a block diagram illustrating a configuration example of a change detection device 1 of the first exemplary embodiment;

Fig. 3 is a diagram for explaining an example of an SAR image set series to be input by an SAR image set input unit 101;

Fig. 4 is a diagram for explaining a polarization;

Fig. 5 is a block diagram illustrating one example of a change detection unit 105;

Fig. 6 is a block diagram illustrating another example of the change detection unit 105;

Fig. 7 is a flowchart illustrating one operation example of the change detection device 1 of the first exemplary embodiment;

Fig. 8 is a flowchart illustrating another operation example of the change detection device 1 of the first exemplary embodiment;

Fig. 9 is a flowchart illustrating a further operation example of the change detection device 1 of the first exemplary embodiment;

Fig. 10 is a block diagram illustrating a configuration example of a change detection device 1 of a second exemplary embodiment;

Fig. 11 is a block diagram illustrating one example of a change detection unit 105 of the second exemplary embodiment;

Fig. 12 is a block diagram illustrating another example of the change detection unit 105 of the second exemplary embodiment; and

Fig. 13 is a block diagram illustrating an outline of the present invention.

**EXEMPLARY EMBODIMENT**

Exemplary Embodiment 1.

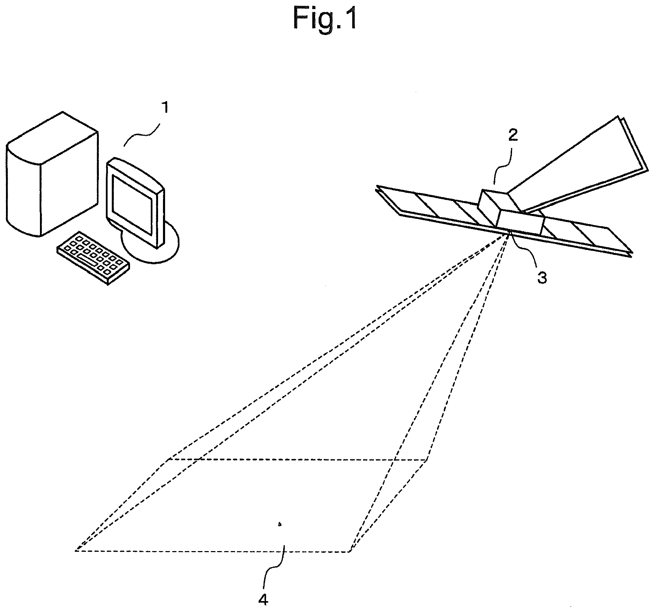

In the following, exemplary embodiments of the present invention will be described with reference to the drawings. Fig. 1 is a diagram illustrating a configuration example of an observation system of a first exemplary embodiment. The observation system illustrated in Fig. 1 includes a change detection device 1, and a synthetic aperture radar 3 mounted on a flying body 2 such as an artificial satellite, an aircraft or the like. In Fig. 1, the reference numeral 4 denotes a field of vision for image capturing (image capturing region) of an SAR image obtained by the synthetic aperture radar 3.
In the present exemplary embodiment, the synthetic aperture radar 3 has a multi-polarization observation mode enabling observation of scattered waves formed of four kinds of combinations of transmission and reception polarizations, i.e. an HH polarization, an HV polarization, a VH polarization and a VV polarization (hereinafter referred to as four basic polarization pairs) at generally the same place at generally the same time. Such a multi-polarization observation mode can be realized, for example, by the synthetic aperture radar 3 including at least one transmitter and two receivers, the transmitter alternately transmitting radio wave pulses of an H polarization and a V polarization and the two receivers (the receiver corresponding to the H polarization and the receiver corresponding to the V polarization) simultaneously receiving backscattering echoes of the respective radio wave pulses. In this manner, reflection intensities and relative phases obtained by the four basic polarization pairs are measured. A range meant here by "generally" in "generally the same place" and "generally the same time" may be any range in which observation data can be corrected by a correction function to data that can be considered to be observed at the same place at the same time. In practice, it represents a deviation in an irradiation place and a deviation in irradiation time corresponding to one cycle of a radio wave pulse in the above-described transmitter in many cases.
In the present invention, an SAR image generated from observation data formed of the four basic polarization pairs which are observed at generally the same place at the generally the same time, or information equivalent to such an SAR image will be referred to as an SAR image set.
In general, the information referred to as an SAR image includes information indicative of an amplitude of a reception electric field or a reflection intensity at a spot corresponding to each pixel and phase information which is information indicative of a phase of a received pulse. A square root of a reflection intensity corresponds to an amplitude of a reception electric field. In the following, information indicative of an amplitude of a reception electric field is also handled as information indicative of a reflection intensity in the present invention. Accordingly, as data associated with each pixel (also referred to as image information), an SAR image can be referred to, in other words, as an image having at least information indicative of a reflection intensity and a phase at a spot corresponding to each pixel. In an SAR image, data associated with each pixel will be referred to as SAR data. In the present invention, the SAR data is defined as information including information indicative of a reflection intensity and information indicative of a phase. The synthetic aperture radar 3 may execute predetermined correction processing with respect to a deviation in irradiation time or place in signal processing for generating SAR data. As accompanying information, the SAR image may include information about polarization used in transmission and reception, or observation conditions such as observation time, an incident angle and information about an orbit.
The SAR image set can have any data structure as long as it has an SAR image generated from observation data formed of the four basic polarization pairs which are observed at generally the same place at the generally the same time, or information equivalent to such an SAR image. For example, the SAR image set may be four SAR images each corresponding to any one of the transmission and reception polarization pairs, i.e. the four basic polarization pairs, or may be one SAR image in which each pixel is associated with four SAR data (e.g. information about four kinds of reflection intensities and phases) formed of the four basic polarization pairs.
The flying body 2 is mounted with a synthetic aperture radar system including the synthetic aperture radar 3. The synthetic aperture radar system includes, for example, the synthetic aperture radar 3, a signal processing unit, a storage unit which in time series stores SAR image sets obtained as a result of observation by the synthetic aperture radar 3, and an SAR image output unit which outputs the stored SAR image set or its time series data in a predetermined format in response to a request.

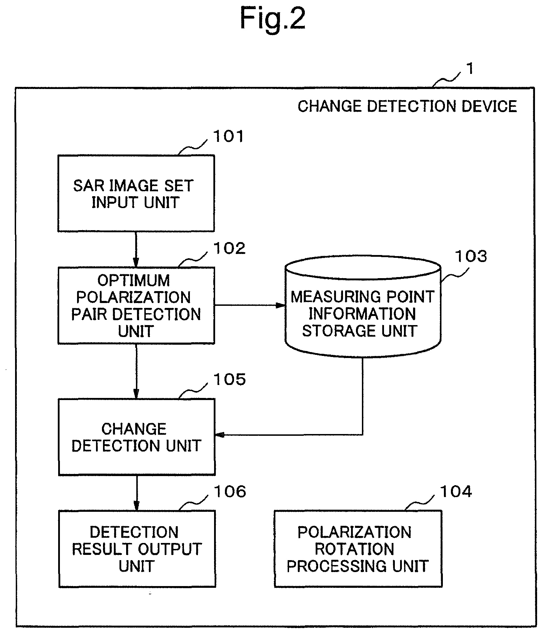

Fig. 2 is a block diagram illustrating a configuration example of the change detection device 1 of the present exemplary embodiment. The change detection device 1 illustrated in Fig. 2 includes an SAR image set input unit 101, an optimum polarization pair detection unit 102, a measuring point information storage unit 103, a polarization rotation processing unit 104, a change detection unit 105 and a detection result output unit 106.
The SAR image set input unit 101 inputs at least two SAR image sets each of which includes a specific region as a change detection target in its field of vision for image capturing and whose observation time at generally the same place is different from each other. In the following, a specific region may be referred to as a region of interest (ROI) in some cases. The SAR image set input here includes at least SAR image sets corresponding to times before and after a period designated by a user as a period when a change is to be detected. In the following, times before and after a period designated by a user as a period when a change is to be detected may be referred to as designated time in some cases. A time period is not limited to one. In addition, at least two SAR image sets input by the SAR image set input unit 101 may be referred to as an "SAR image set series" in some cases in a sense of a set of SAR image sets generated from observation data whose observation time at generally the same place is different.

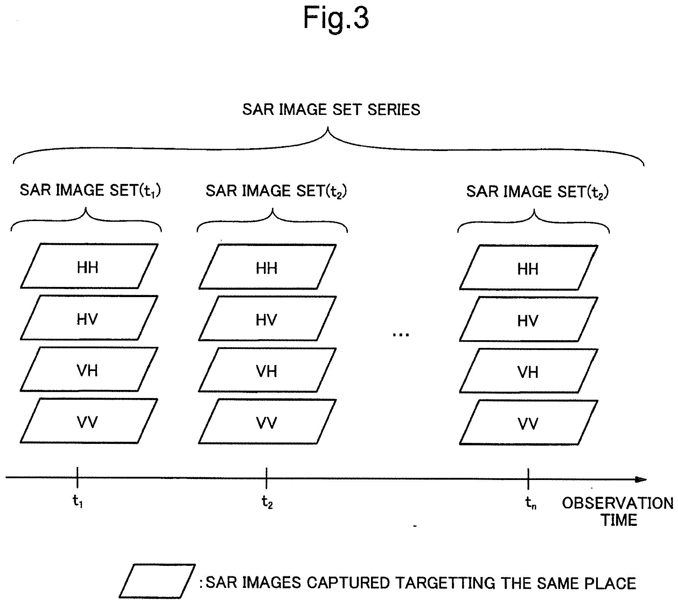

Fig. 3 is a diagram for explaining an example of SAR image set series input by the SAR image set input unit 101. For example, the SAR image set input unit 101 may input such an SAR image set series made up of a number n of SAR image sets (e.g. several tens of pairs) having different observation times as illustrated in Fig. 3.

The SAR image set input unit 101 may, for example, directly receive time series data of an SAR image set output by the SAR image output unit of the synthetic aperture radar system mounted on the flying body 2 to input an SAR image set series. In such a case, the SAR image set input unit 101 may be connected to the synthetic aperture radar system through a wired or wireless communication network to request time series data of a desired SAR image set according to a predetermined format and receive, as an SAR image set series, time series data of the SAR image set transmitted as a response. The SAR image set input unit 101 may be a common file input unit which according to user operation, as an SAR image set series, inputs time series data of an SAR image set acquired through connection to the synthetic aperture radar system by a user's predetermined method or a result of conversion of the time series data into a predetermined format.

Using at least one SAR image set input by the SAR image set input unit 101, the optimum polarization pair detection unit 102 detects an optimum polarization pair as a combination of optimum transmission and reception polarizations with respect to each target pixel. The optimum polarization pair detection unit 102 of the present exemplary embodiment detects an optimum polarization pair for each pixel using polarization rotation processing provided by the polarization rotation processing unit 104, which will be described later. An SAR image set for use in detecting an optimum polarization pair can be an SAR image set acquired at any time. A target pixel here may be, for example, each pixel included in an image region corresponding to a region of interest or a pixel designated by a user.

The optimum polarization pair detection unit 102 may, for example, determine one SAR image set for use in the optimum polarization pair detection processing from among the input SAR image sets and using the determined one SAR image set, calculate a reflection intensity of each predetermined candidate for an optimum polarization pair with respect to each pixel by the polarization rotation processing. Then, based on the calculation result of the reflection intensity of each candidate, an optimum polarization pair for the relevant pixel may be determined.

The polarization rotation processing, which is processing referred to also as polarization synthesis, is to acquire a reflection intensity obtained by an arbitrary transmission and reception polarization combination from SAR data (in particular, a reflection intensity and a relative phase) formed of four basic polarization pairs. Use of reflection intensities and relative phases obtained by an HH polarization, an HV polarization, a VH polarization and a VV polarization observed by the synthetic aperture radar at generally the same place at generally the same time enables acquisition of a complete scattering matrix of each resolution cell in the field of vision for image capturing 4 and enables calculation of complete polarization properties of each resolution from the scattering matrix. The resolution cell here is a section unit of the ground surface from which backscattering is observed by the synthetic aperture radar and corresponds to a pixel in an SAR image. The resolution cell is determined by a ground resolution of the synthetic aperture radar. When complete polarization properties of each pixel are obtained, a reflection intensity of an arbitrary combination of transmission and reception polarizations can be obtained based on the same.

Among examples of such information obtained from SAR data is polarimetric SAR data. The polarimetric SAR data is data which expresses a changed phase of scattered waves at the time of scattering.

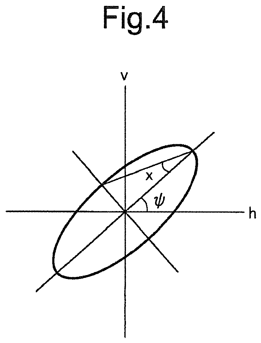

In the following, the polarization rotation processing will be briefly described. General expression of a polarization of a plane wave is an elliptical polarization, which can be described using an angle $\chi$ and an angle $\psi$ as illustrated in Fig. 4. The angle $\chi$ here represents roundness of an ellipse and the angle $\psi$ represents an angle from a horizontal direction of the line of apsides. A polarization vector $q_s$ of a scattered wave is expressed by the following Equation (1) using a polarization vector $q_t$ and a scattering matrix S of a transmission antenna.

[Equation 1]

$$q_s = Sq_t \quad , \quad S = \begin{bmatrix} S_{hh} & S_{hv} \\ S_{vh} & S_{vv} \end{bmatrix} \quad \cdot \cdot \cdot \ (1)$$

The scattering matrix S is a complex matrix of $2\times2$ in which an incident polarization vector and a scattering polarization vector are associated with each other. An element $S_{ji}$ of the scattering matrix S represents an electric field magnitude and a phase change of a scattered wave of a polarization j relative to an incident wave of a polarization i.

Each element of the scattering matrix S corresponds to SAR data of the four basic polarization pairs.

With $q_r$ as a polarization vector of the reception antenna, a complex amplitude V and a scattering power (reflection intensity) P of the reception electric field are represented by the following Equation (2), in which t on the left shoulder denotes a transposed matrix and * on the right shoulder denotes a complex conjugate.

$$V = q_r{}^t S q_t,$$

$$P = VV^* \cdots (2)$$

When the scattering matrix S is obtained, a response (a complex amplitude V or a scattering power P of the reception electric field) with respect to an arbitrary combination of transmission and reception polarizations defined by $q_t$ and $q_r$ can be calculated.

A corresponding relationship between an incident wave and a scattered wave can be obtained using a Stokes vector in place of a polarization vector. For example, between a Stokes vector $G_t$ of the incident wave and a Stokes vector $G_r$ of the scattered wave, such a relationship as indicated in the following Equation (3) is established.

$$P = G_r{}^t F G_t \cdots (3)$$

F represents a real matrix of 4x4 which is referred to as a Stokes matrix. The Stokes vectors Gt and Gr are four-dimensional vectors each formed of four Stokes parameters $G_0$, $G_1$, $G_2$, and $G_3$ indicated in the following Equation (4). $a_h$ and $a_v$ are an amplitude of a horizontal component $E_h$ and an amplitude of a vertical component $E_v$ of an electric field vector, respectively. $\delta$ represents a difference $(\delta_h - \delta_v)$ between a phase $\delta_h$ of $E_h$ and a phase $\delta_v$ of $E_v$. While a polarization vector is expressed by a complex number, a Stokes vector is expressed by a real number. Elements of the Stokes matrix F are obtained by a relationship known from the elements of the scattering matrix S, though not detailed here.

$$G_0 = a_h{}^2 + a_v{}^2,$$

$$G_1 = a_h{}^2 - a_v{}^2,$$

$$G_2 = 2 a_h a_v \cos\delta,$$

$$G_3 = 2 a_h a_v \sin\delta \cdots (4)$$

Among methods for obtaining a scattering intensity with respect to an arbitrary combination of transmission and reception polarizations from such a scattering matrix S or a Stokes matrix F is, for example, the following method.

First, each element of the Stokes vectors $G_t$ and $G_r$ of a transmission and reception antenna in a transmission and reception polarization pair to be obtained is described with $\chi$ and $\psi$ of an elliptical polarization as indicated in the following Equation (5).

$$G_0 = 1.0,$$

$$G_1 = \cos(2\chi)\cos(2\psi),$$

$$G_2 = \cos(2\chi)\sin(2\psi),$$

$$G_3 = \sin(2\chi) \cdots (5)$$

$\chi = 0°$ represents a liner polarization, $|\chi| = 45°$ represents a circular polarization, $\chi < 0$ represents a clockwise polarization and $\chi > 0$ represents a counterclockwise polarization. In addition, $\psi = 0°$ represents a horizontal polarization and $\psi = 90°$ represents a vertical polarization. A range of $\chi$ is -45° to 45° and a range of $\psi$ is 0° to 180°. For example, holding both $\chi = 0°$ and $\psi = 0°$ expresses a linear horizontal polarization and holding both $\chi = 35°$ and $\psi = 90°$ expresses a counterclockwise elliptical polarization whose line of apsides is in a horizontal direction.

Next, each element of a Stokes matrix F for a pixel in a target area is averaged to obtain a mean Stokes matrix F'.

Next, the Stokes vector $G_t$ of the transmission antenna, the Stokes vector $G_r$ of the reception antenna and the obtained mean Stokes matrix F are substituted in the above Equation (3) (F is replaced by F') to obtain the scattering power P. The reason for using the mean Stokes matrix F' as the Stokes matrix is for reducing speckle noise generated when measuring planarly distributed targets using coherent radio waves. Weightedly averaging a plurality of target Stokes matrices F to obtain the scattering power P here leads to a weighted average of the scattering powers P from the plurality of targets.

Such a method of obtaining the scattering power P from polarization properties and an arbitrary transmission and reception polarization pair as described above is also recited, for example, in the above-described Non-Patent Document 3.

When transmission and reception polarizations are changed, a target scattering intensity is changed by the polarizations. By using such polarization rotation processing, the optimum polarization pair detection unit 102 may detect, as an optimum polarization pair, a transmission and reception polarization pair candidate from which the highest reflection intensity is obtained among the respective candidates determined in advance for an optimum polarization pair.

A transmission and reception polarization pair to be a candidate for an optimum polarization pair is not particularly limited. Specifically, with respect to each of a transmission wave and a reception wave, a polarization can be arbitrarily set whose rotation angle is within a range of 0 to 180°. The rotation angle of a polarization here is a polarization angle of the polarization in question when a polarization angle of a horizontal polarization is set to be 0°. The rotation angle of a polarization corresponds to the angle $\psi$ indicated in Fig. 4 and in a case, for example, of an H polarization, the angle will be 0° and in a case of a V polarization, it will be 90°. In addition, 0° and 180° of the rotation angle represent the same polarization. A candidate optimum polarization pair may be, for example, a combination of transmission and reception linear polarizations which are rotated by 5° from 0° (horizontal) to 180°. In a case of the above example, with $\alpha_t$ as a rotation angle of a transmission polarization and $\alpha_r$ as a rotation angle of a reception polarization to express a combination thereof as $\{\alpha_t, \alpha_r\}$, optimum polarization pair candidates will be $\{\{\{0,0\},...,\{0,175\}\},\{\{5,0\},...,\{5,175\}\},...,\{\{175,0\},...,\{175,175\}\}\}$.

When two or more SAR image sets are used, the optimum polarization pair detection unit 102 may obtain a reflection intensity with respect to each candidate using each SAR image set to select, as an optimum polarization pair, a candidate having the highest average reflection intensity or a candidate whose average reflection intensity is not less than a predetermined value and whose reflection intensity varies least.

When as a result of obtaining reflection intensities with respect to all the candidates, no candidate has a reflection intensity not less than the predetermined value, the optimum polarization pair detection unit 102 may determine that there is no optimum polarization pair because a pixel in question is not appropriate as a measuring point.

When obtaining an optimum polarization pair, the optimum polarization pair detection unit 102 may, for example, first use two or more SAR image sets captured during a period when no change is assumed to occur to determine whether they have PS properties or not. For example, when a range of change of a relative phase during the above period by any one of transmission and reception polarization pairs as the four basic polarization pairs is equal to or larger than the predetermined value, the optimum polarization pair detection unit 102 may determine that there is no optimum polarization pair irrespective of determination based on the above-described reflection intensity because a pixel in question is not appropriate as a measuring point.

When optimum polarization pair detecting time reduction is required, the optimum polarization pair detection unit 102 may, for example, consider, as an optimum polarization pair, a combination of transmission and reception polarizations which will have a reflection intensity not less than the predetermined value among predetermined candidates for an optimum polarization pair. In such a case, the optimum polarization pair detection unit 102 may, for example, obtain a reflection intensity with respect to a plurality of provided optimum polarization pair candidates by polarization rotation processing in a predetermined order and consider a candidate whose reflection intensity attains the predetermined value first as an optimum polarization pair in a pixel in question. In the following, a combination of transmission and reception polarization rotation angles in the optimum polarization pair may be referred to as an optimum rotation angle pair in some cases. It can be said that determination of an optimum polarization pair by the optimum polarization pair detection unit 102 is determination of an optimum rotation angle pair.

The optimum polarization pair detection unit 102 generates measuring point information including information indicative of thus obtained optimum polarization pair in each pixel and stores the same in the measuring point information storage unit 103 which will be described later. The information indicative of an optimum polarization pair may be information including, for example, a transmission polarization rotation angle and a reception polarization rotation angle. When detecting no optimum polarization pair, information indicating to that effect is registered as information indicative of an optimum polarization pair.

The measuring point information is information about a measuring point in PS-InSAR and may be, for example, position information of a pixel or a spot corresponding to the pixel and information associated with information indicative of an optimum polarization pair. In addition to the position information and the information indicative of an optimum polarization pair, the measuring point information may include a reflection intensity (including an average reflection intensity) obtained by an optimum polarization pair which is obtained at the time of detection or information indicative of polarization properties (the scattering matrix S, the Stokes matrix F or the like). Further, optimum polarization pair detection time and date or information about an SAR image set used for detection may be included.

The measuring point information storage unit 103 stores measuring point information.

The polarization rotation processing unit 104, which is a means that provides the polarization rotation processing, uses at least one SAR image set to calculate a reflection intensity obtained by a designated combination of transmission and reception polarizations in a designated pixel.

The change detection unit 105 detects a change at a spot corresponding to a pixel as a target whose change is to be detected based on the measuring point information stored in the measuring point information storage unit 103 and an input SAR image set series.

The detection result output unit 106 outputs a detection result obtained by the change detection unit 105.

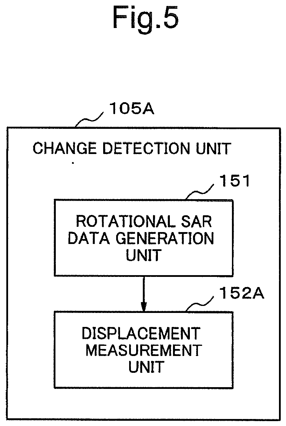

In the following, the change detection unit 105 of the present exemplary embodiment will be described in detail. Fig. 5 is a block diagram illustrating one example of the change detection unit 105. A change detection unit 105A illustrated in Fig. 5 includes a rotational SAR data generation unit 151 and a displacement measurement unit 152A.

On the basis of an optimum polarization pair of a target pixel indicated by the measuring point information stored in the measuring point information storage unit 103 and an SAR image set of designated time which is included in an input SAR image set series, the rotational SAR data generation unit 151 generates, for each target pixel, rotational SAR data corresponding to at least two different times, each of which SAR data is formed of an optimum polarization pair of the pixel in question at the corresponding time. For each target pixel, the rotational SAR data generation unit 151 may generate the rotational SAR data corresponding to designated time (to be more specific, each time included in the designated time), for example, by using the polarization rotation processing provided by the polarization rotation processing unit 104. In the following, the rotational SAR data corresponding to designated time of a target pixel which is generated by the rotational SAR data generation unit 151 will be referred to as "a rotational SAR data series" of a target pixel in some cases in a sense of a set of rotational SAR data generated from pieces of observation data whose observation times of the target pixel are different.

The rotational SAR data generation unit 151 is capable of generating a rotational SAR data series with respect to each target pixel, for example, by executing, for each target pixel, the polarization rotation processing with a designated optimum polarization pair at each time included in designated time using an SAR image set of the designated time included in an SAR image set series.

When an optimum polarization pair is any one of the four basic polarization pairs, SAR data included in an input SAR image set may be used as the rotational SAR data.

The displacement measurement unit 152A measures displacement at a spot corresponding to a target pixel using a rotational SAR data series for the target pixel. More specifically, the displacement measurement unit 152A calculates a phase difference caused by a change at a spot corresponding to the target pixel using the rotational SAR data series for the target pixel in PS-InSAR processing. In the PS-InSAR processing, displacement at a spot corresponding to the target pixel can be measured by obtaining a phase difference caused by a change while removing a phase difference caused by a height from among phase differences appearing between SAR data of the target pixel to be compared.

For example, when an SAR image set series including a number n of SAR image sets is input and each time when each of the number n of the SAR image sets is acquired is designated as designated time, a rotational SAR data series including the number n of the rotational SAR data each corresponding to any of times t1 to tn is input to the displacement measurement unit 152A for each one target pixel.

In such a case, as information indicative of displacement between designated times of the target pixel, the displacement measurement unit 152A may output, for example, a maximum value of phase differences appearing between the first time and each of the subsequent times, a cumulative total value of the phase differences appearing between adjacent times or the like. Specifically, a phase difference appearing between rotational SAR data corresponding to time t1 and rotational SAR data corresponding to each of the time t2 to tn may be obtained to output the largest value of the obtained phase differences as information indicative of displacement between designated times of the target pixel. In addition, the displacement measurement unit 152A may, for example, obtain a phase difference appearing between the rotational SAR data corresponding to time t1 and the rotational SAR data corresponding to time t2, a phase difference appearing between the rotational SAR data corresponding to time t2 and the rotational SAR data corresponding to time t3, ··· a phase difference appearing between the rotational SAR data corresponding to time t(n-1) and the rotational SAR data corresponding to time tn, thereby outputting a cumulative total value (the upper limit is set to be $2\pi$) of the obtained phase differences as information indicative of displacement between the designated times of the target pixel.

In this case, the detection result output unit 106 may output information indicative of displacement between the designated times of each target pixel which is output from the displacement measurement unit 152A as information indicative of a detection result of a change at a spot corresponding to each target pixel.

The detection result output unit 106 may generate and display a differential interference image based on the information indicative of displacement between the designated times of each target pixel which is output from the displacement measurement unit 152A. The differential interference image is an image which holds, at least so as to be associated with each target pixel, at least information about a phase difference caused by a change at a spot corresponding to the target pixel or image information corresponding to an amount of the phase difference. This enables color-coding of each pixel according to an amount of displacement at a spot corresponding to the pixel when a differential interference image is displayed at an output destination. With respect to other pixels than a target pixel in a differential interference image to be generated, the detection result output unit 106 may hold information to the effect that the pixel is not a measurement target or that it has no displacement.

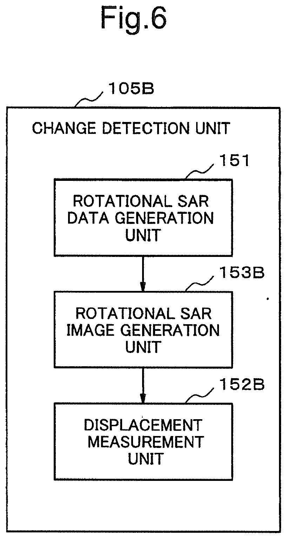

Fig. 6 is a block diagram illustrating another example of the change detection unit 105. A change detection unit 105B illustrated in Fig. 6 includes a rotational SAR data generation unit 151, a rotational SAR image generation unit 153B and a displacement measurement unit 152B.

The rotational SAR data generation unit 151 is the same as the rotational SAR data generation unit 151 of the change detection unit 105A illustrated in Fig. 5.

The rotational SAR image generation unit 153B integrates generated rotational SAR data series for the respective target pixels to generate a rotational SAR image corresponding to each designated time.

The rotational SAR image here is an image holding at least rotational SAR data as SAR data formed of an optimum polarization pair of a target pixel at least so as to be associated with the target pixel. Unlike an ordinary SAR image, the rotational SAR image is an image in which a combination of transmission and reception polarizations can differ with each pixel.

With respect to other pixel than a target pixel in each rotational SAR image, the rotational SAR image generation unit 153B may hold rotational SAR data to the effect that the pixel is invalid or in which its reflection intensity is set to be zero, or, for example, may select and hold SAR data formed of any one transmission and reception polarization pair of the four basic polarization pairs at time in question which are included in the SAR image set series.

Using rotational SAR images generated corresponding to a plurality of times, the displacement measurement unit 152B measures displacement at a spot corresponding at least to a target pixel to generate a differential interference image indicative of a measurement result. The displacement measurement unit 152B may just execute, for example, the same processing as the PS-InSAR processing using SAR images corresponding to the plurality of times.

While in the above-described displacement measurement unit 152A, input data is a rotational SAR data series which is pixel-based data and output data is information indicative of a pixel-based measurement result, the displacement measurement unit 152B differs in that input data is a rotational SAR image which is image-based data and output data is a differential interference image which is an image-based measurement result. Thus, a format of input/output data to/from the displacement measurement unit can be selected.

In the present exemplary embodiment, the SAR image set input unit 101 is realized, for example, by a data input device and a computer system operable according to a program. The optimum polarization pair detection unit 102, the polarization rotation processing unit 104 and the change detection unit 105 are realized, for example, by a computer system operable according to a program. The measuring point information storage unit 103 is realized, for example, by a storage device. The detection result output unit 106 is realized, for example, by a data output device and a computer system operable according to a program.

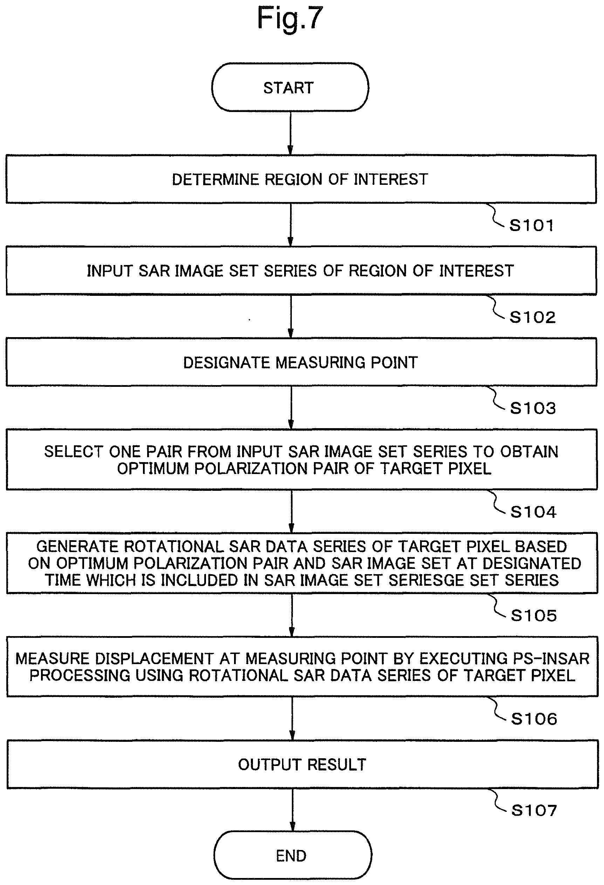

Next, operation of the present exemplary embodiment will be described. Fig. 7 is a flowchart illustrating one operation example of the change detection device 1 of the present exemplary embodiment. Fig. 7 illustrates an example of operation of the change detection device 1 for detecting distortion or the like of a target object by displacement measurement at a spot designated by a user within a region of interest. In the following, description will be made of a case, as an example, where the change detection device 1 includes the change detection unit 105A illustrated in Fig. 5 as the change detection unit 105.

In the present example, first, a user is caused to determine a region of interest (Step S101). The change detection device 1 may, for example, have a user interface such as a region of interest designating screen for designating a region of interest and cause a user to input information about a region of interest through the user interface. The information about a region of interest may be, for example, a latitude and a longitude and a radius of a central spot or the like. It is also possible, for example, to display a map on which the field of vision for image capturing 4 of the synthetic aperture radar 3 is mapped and cause a user to designate a range of a region of interest or the like on the map.

Next, the SAR image set input unit 101 inputs an SAR image set series including SAR image sets acquired at different times with respect to a region including the region of interest (Step S102).

Next, the change detection device 1 causes a user to designate at least one spot (measuring point) at which the user particularly wants to measure displacement within the region of interest (Step S103). The change detection device 1 may, for example, have a user interface such as a measuring point designating screen for designating a measuring point and cause a user to input information of a measuring point through the user interface. The information of a measuring point may be, for example, information indicative of a position on the ground surface (latitude and longitude etc.) or pixel coordinates in an SAR image included in the acquired SAR image set series. The change detection device 1 is assumed to hold information indicative of a corresponding relationship between a position on the ground surface and a pixel position in the SAR image. In the following, a pixel corresponding to a measuring point designated in the present example is assumed to be a target pixel.

Next, the optimum polarization pair detection unit 102 detects an optimum polarization pair of a target pixel by executing the polarization rotation processing using at least one SAR image set included in the input SAR image set series (Step S104). The optimum polarization pair detection unit 102 also generates measuring point information including information indicative of the detected optimum polarization pair of the target pixel and stores the same in the measuring point information storage unit 103.

Next, the rotational SAR data generation unit 151 of the change detection unit 105 generates a rotational SAR data series for the target pixel based on the optimum polarization pair of the target pixel which is indicated by the measuring point information and an SAR image set corresponding to designated time which is included in the SAR image set series (Step S105).

Next, the displacement measurement unit 152A of the change detection unit 105 measures displacement at a spot (spot designated as a measuring point) corresponding to the target pixel by executing the PS-InSAR processing using the generated rotational SAR data series of the target pixel (Step S106). Then, the displacement measurement unit 152A outputs, for example, information indicative of the displacement occurring between designated times of the target pixel which is obtained as a result of the measurement. With respect to some target pixel, even an optimum polarization pair has a low reflection intensity or has no PS properties, so that a condition for a measuring point is not satisfied and information indicative of being immeasurable is accordingly output in some cases.

Lastly, the detection result output unit 106 outputs the information obtained at Step S106 as information indicative of the change detection result at the designated spot (Step S107). The detection result output unit 106 may, for example, determine a change or no change at the designated spot based on the information indicative of the displacement of the target pixel between the designated times which is obtained from the displacement measurement unit 152A and output the information obtained at Step S106 together with the determination result (change or no change).

When there are a plurality of target pixels, i.e., when a plurality of measuring points are designated, the processing of Steps S104 to S107 is repeatedly executed.

The foregoing method increases a possibility of detecting a change at a measuring point designated by a user. The reason is that the change detection device 1 executes the PS-InSAR processing after obtaining an optimum polarization pair of a pixel corresponding to a spot in question and then generating a rotational SAR data series as SAR data formed of optimum polarization pairs at the spot at a plurality of times. For example, when only SAR data formed of one transmission and reception polarization pair is used, a spot in question could not be processed as a measuring point because a reflection intensity obtained by the transmission and reception polarization pair is too low. By contrast, according to the present invention, even with respect to such a spot, displacement can be measured at the spot using other transmission and reception polarization pair having a higher reflection intensity, if any. This is the very evidence that the present invention enables an increase in change detection sensitivity.

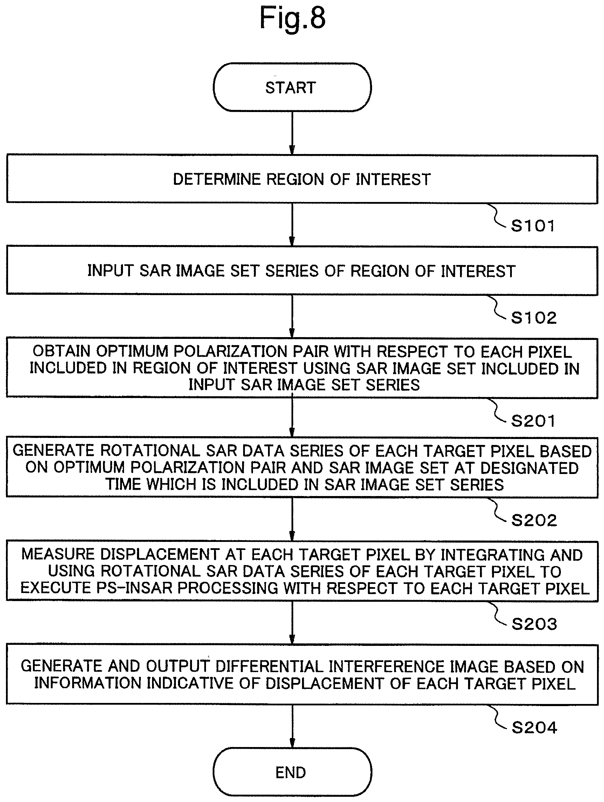

Fig. 8 is a flowchart illustrating another operation example of the change detection device 1 of the present exemplary embodiment. Fig. 8 illustrates an operation example of the change detection device 1 for detecting distortion or the like of a target object by executing displacement measurement with respect to all the pixels included in an image region of an SAR image corresponding to a region of interest. Also in the present example, description will be made of a case, as an example, where the change detection device 1 includes the change detection unit 105A as illustrated in Fig. 5 as the change detection unit 105. Since Steps S101 and S102 are the same as those illustrated in Fig. 7, no description will be made thereof.

In the present example, all the pixels included in an image region of an SAR image corresponding to a region of interest are assumed to be target pixels.

In the present example, when an SAR image set series is input (Step S102), the optimum polarization pair detection unit 102 executes the polarization rotation processing with respect to each of the target pixels using at least one SAR image set included in the input SAR image set series, thereby detecting an optimum polarization pair for each target pixel (Step S201). The optimum polarization pair detection unit 102 also generates measuring point information including information indicative of the obtained optimum polarization pair of each target pixel and stores the same in the measuring point information storage unit 103.

Next, the rotational SAR data generation unit 151 of the change detection unit 105 generates a rotational SAR data series of each target pixel based on the optimum polarization pair of each target pixel which is indicated by the measuring point information and an SAR image set corresponding to designated time which is included in the SAR image set series (Step S202).

Next, the displacement measurement unit 152A of the change detection unit 105 measures displacement at a spot corresponding to each target pixel by executing the PS-InSAR processing with respect to each target pixel using the generated rotational SAR data series of each target pixel (Step S203). The displacement measurement unit 152A, for example, outputs information indicative of the displacement occurring between designated times of each target pixel which is obtained as a result of measurement. With respect to some target pixel, a reflection intensity is too low to obtain information of a phase difference, so that a condition for a measuring point is not satisfied and information indicative of being immeasurable is accordingly output in some cases.

Lastly, the detection result output unit 106 generates a differential interference image based on the information obtained at Step S203 and outputs the generated differential interference image as information indicative of a result of change detection in the region of interest (Step S204).

Thus, in the present example, with all the pixels included in a region of interest as targets, processing of obtaining an optimum polarization pair, processing of generating a rotational SAR data series formed of an optimum polarization pair and processing of obtaining a phase difference caused by a change using a rotational SAR data series (PS-InSAR processing) are executed to output a result of the processing in a form of a differential interference image. According to this method, even when a user does not particularly know whether a spot corresponding to each pixel included in a region of interest satisfies a condition for a measuring point or not, change detection is possible using all the measurable spots included in the region of interest. This is the very evidence that the present invention improves change detection sensitivity. Further, outputting a change detection result in a form of a differential interference image enables spontaneous detection of a spot where a change occurs in the region of interest, thereby increasing visual confirmability of a detection result.

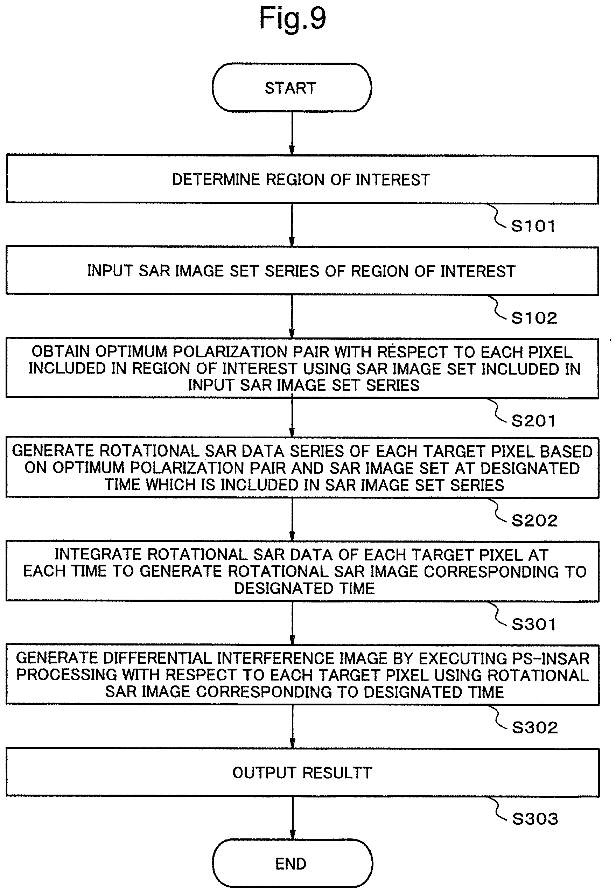

Fig. 9 is a flowchart illustrating a further operation example of the change detection device 1 of the present exemplary embodiment. Fig. 9 illustrates an operation example of the change detection device 1 for detecting distortion or the like of a target object by executing displacement measurement with respect to all the pixels included in an image region of an SAR image corresponding to a region of interest. In the present example, description will be made of a case, as an example, where the change detection device 1 includes the change detection unit 105B as illustrated in Fig. 6 as the change detection unit 105. Since processing at Steps S101 and S102 is the same as in the example illustrated in Fig. 7, no description will be made thereof. In addition, since processing at Steps S201 and S202 is the same as in the example illustrated in Fig. 8, no description will be made thereof.

In the present example, all the pixels included in an image region of an SAR image corresponding to a region of interest are assumed to be target pixels.

In the present example, when the rotational SAR data generation unit 151 of the change detection unit 105 generates a rotational SAR data series of each target pixel (Step S202), at each time included in the designated time, the rotational SAR image generation unit 153B integrates rotational SAR data corresponding to the time in question which is included in a rotational SAR data series of each target pixel to generate a rotational SAR image corresponding to the designated time (Step S301).

Next, the displacement measurement unit 152B of the change detection unit 105 generates a differential interference image by executing the PS-InSAR processing using the generated rotational SAR image corresponding to the designated time (Step S302).

Lastly, the detection result output unit 106 outputs the differential interference image obtained at Step S302 as information indicative of at least a result of change detection in the region of interest (Step S303).

Thus, in the present example, with all the pixels included in a region of interest as targets, processing of obtaining an optimum polarization pair, processing of generating a rotational SAR data series formed of an optimum polarization pair, processing of generating a rotational SAR image corresponding to designated time from the rotational SAR data series of each pixel and processing of generating a differential interference image using the rotational SAR image corresponding to the designated time (PS-InSAR processing) are executed to output a differential interference image as a result of the processing. According to this method, in addition to the effect attained by the method illustrated in Fig. 8, such existing PS-InSAR processing can be used as to input SAR images corresponding to a plurality of times to output a differential interference image.

As described in the foregoing, since according to the present exemplary embodiment, the number of measuring points can be increased more easily than by a method using SAR data formed of at least one kind of transmission and reception polarization pair for every pixel, a change of a target object or ground surface can be detected more accurately. For example, even when with respect to a spot having PS properties is located on an artificial structure whose distortion is to be detected, a reflection intensity at the spot is so low that distortion will be buried in noise only with SAR data formed of one kind of transmission and reception polarization pair, a displacement at the spot can be measured using SAR data formed of other arbitrary transmission and reception polarization pair having a high reflection intensity for each pixel, so that an effect of distortion detection can be attained.

A further effect can be obtained that thus attained increase in the number of measurable measuring points enables more accurate execution of deterioration analyses of artificial structures such as buildings, roads, bridges and the like, or analyses of ground roughness change such as land subsidence measurement, land diastrophism measurement, or the like.

Exemplary Embodiment 2.

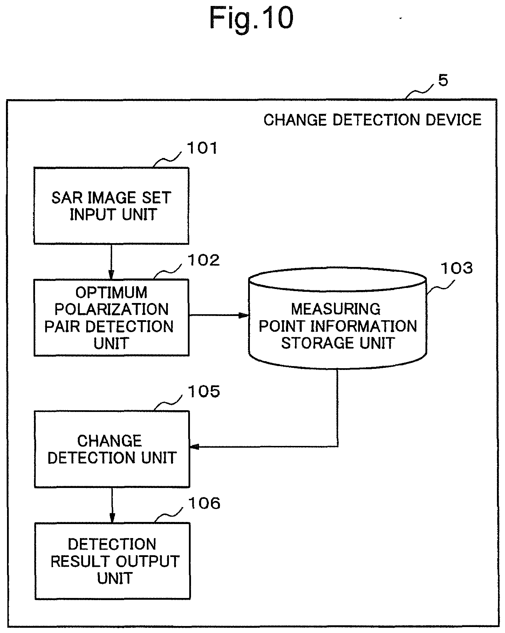

Next, a second exemplary embodiment of the present invention will be described. Fig. 10 is a block diagram illustrating a configuration example of a change detection device 1 of the second exemplary embodiment of the present invention. The change detection device 1 illustrated in Fig. 10 differs from the change detection device 1 according to the first exemplary embodiment illustrated in Fig. 2 in having the polarization rotation processing unit 104 omitted.

The optimum polarization pair detection unit 102 of the present exemplary embodiment is basically the same as the optimum polarization pair detection unit 102 of the first exemplary embodiment, with the only difference being that only the four basic polarization pairs, an HH polarization, an HV polarization, a VH polarization and a VV polarization are used as optimum polarization pair candidates.

Specifically, the optimum polarization pair detection unit 102 of the present exemplary embodiment detects (selects) an optimum polarization pair from among the four basic polarization pairs for each pixel using one SAR image set included in an SAR image set series. The optimum polarization pair detection unit 102 may, for example, just compare reflection intensities or the like indicated in SAR data formed of the four basic polarization pairs of a target pixel included in one SAR image set included in an SAR image set series to select one combination of transmission and reception polarizations as an optimum polarization pair from among the four basic polarization pairs as optimum polarization pair candidates. A selection method therefor can be the same as in the first exemplary embodiment. In addition, the optimum polarization pair detection unit 102 generates measuring point information including information indicative of thus obtained optimum polarization pair of each target pixel and stores the same in the measuring point information storage unit 103.

On the basis of the measuring point information, the change detection unit 105 of the present exemplary embodiment detects a change at a spot corresponding a target pixel by, as necessary, selectively using SAR data formed of an optimum polarization pair of the target pixel from among SAR data formed of the four basic polarization pairs of the target pixel at designated time included in the SAR image set series.

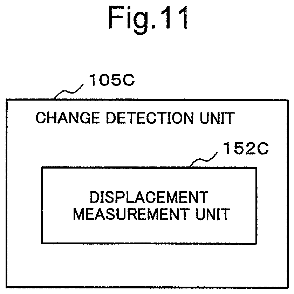

Fig. 11 is a block diagram illustrating one example of a change detection unit 105 of the present exemplary embodiment. A change detection unit 105C illustrated in Fig. 11 includes a displacement measurement unit 152C.

The displacement measurement unit 152C is basically the same as the displacement measurement unit 152A of the change detection unit 105A illustrated in Fig. 5, with the only difference being that SAR data formed of the four basic polarization pairs of a target pixel at designated time included in the SAR image set series is used in place of the rotational SAR data series for the target pixel. For example, when SAR data formed of the four basic polarization pairs of a target pixel at designated time included in the SAR image set series is input, the displacement measurement unit 152C selects SAR data formed of an optimum polarization pair at each time based on the measuring point information to measure displacement at a spot corresponding to the target pixel.

The displacement measurement unit 152C is the same as the above-described displacement measurement unit 152A, with the only difference being that SAR data formed of an optimum polarization pair of a pixel in question at designated time which is included in an SAR image set series is selectively used based on the measuring point information.

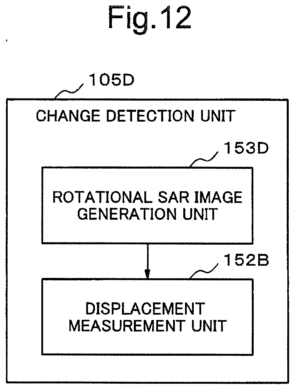

Fig. 12 is a block diagram illustrating another example of the change detection unit 105 of the present exemplary embodiment. A change detection unit 105D illustrated in Fig. 12 includes a rotational SAR image generation unit 153D and a displacement measurement unit 152B.

The rotational SAR image generation unit 153D is basically the same as the rotational SAR image generation unit 153B of the change detection unit 105 of the first exemplary embodiment illustrated in Fig. 6, with the only difference being that SAR data formed of the four basic polarization pairs of a target pixel at designated time which is included in an SAR image set series is used in place of a rotational SAR data series for the target pixel. For example, when SAR data formed of the four basic polarization pairs of a target pixel at designated time included in the SAR image set series is input, the rotational SAR image generation unit 153D selects SAR data formed of an optimum polarization pair for each target pixel at each time based on the measuring point information and integrates the data to generate a rotational SAR image corresponding to the designated time.

The rotational SAR image generation unit 153D is the same as the above-described rotational SAR image generation unit 153B, with the only difference in using SAR data which is selected based on the measuring point information and formed of an optimum polarization pair of a pixel in question at designated time which is included in an SAR image set series.

As described in the foregoing, according to the present exemplary embodiment, even with a simple configuration in which no polarization rotation processing is executed, the number of measuring points can be increased more than by a method using SAR data formed of one kind of a transmission and reception polarization pair for every pixel, so that a change of a target object or ground surface can be detected more accurately. The remaining effects are the same as those of the first exemplary embodiment.

While in the above-described respective exemplary embodiments, the description has been made of a case where the change detection device includes the measuring point information storage unit 103 as a unit for storing measuring point information, the measuring point information storage unit 103 can be omitted. In such a case, measuring point information can be just output from the optimum polarization pair detection unit 102 directly to the change detection unit 105.

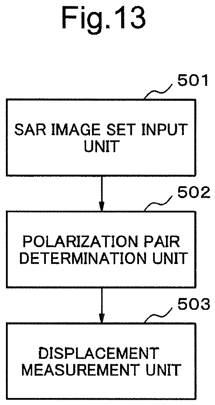

Next, an outline of the present invention will be described. Fig. 13 is a block diagram illustrating an outline of the change detection device according to the present invention. As illustrated in Fig. 13, the change detection device according to the present invention includes an SAR image set input unit 501, a polarization pair determination unit 502 and a displacement measurement unit 503.

So as to be associated with each pixel corresponding to a resolution cell within a field of vision for image capturing including a specific region (region of interest), the SAR image set input unit 501 (e.g. the SAR image set input unit 101) inputs at least two SAR image sets each holding at least information indicative of a reflection intensity and a phase, the information being generated from observation data formed of four basic polarization pairs, i.e. an HH polarization, an HV polarization, a VH polarization and a VV polarization which are combinations of transmission and reception polarizations observed by the synthetic aperture radar at generally the same time.

Using at least one of the input SAR image sets, the polarization pair determination unit 502 (e.g. the optimum polarization pair detection unit 102) determines a polarization pair whose reflection intensity is not less than a predetermined value or the highest with respect to each target pixel. The target pixel here is, for example, each pixel within an image region corresponding to a region of interest or a designated pixel within the image region.

The displacement measurement unit 503 (e.g. the change detection unit 105, in particular, the displacement measurement unit 152A, the displacement measurement unit 152B or the displacement measurement unit 152C) measures displacement at a spot corresponding to a target pixel based on a polarization pair determined by the polarization pair determination unit 502 and an input SAR image set.

Including such characteristic elements, displacement can be detected in PS-InSAR at as many spots allowing measurement as possible or displacement at such spots can be detected without missing them, thereby enabling highly sensitive change detection.

With respect to each target pixel, the polarization pair determination unit 502 may determine a polarization pair whose reflection intensity is not less than a predetermined value or the highest from among predetermined polarization pair candidates.

The polarization pair candidates may be four kinds of an HH polarization, an HV polarization, a VH polarization and a VV polarization.

The polarization pair candidates may be a set of pairs each including a transmission polarization having a polarization rotation angle of any of 0° to 180° and a reception polarization having a polarization rotation angle of any of 0° to 180°.

The change detection device according to the present invention includes a polarization rotation processing unit (e.g. the polarization rotation processing unit 104) which uses at least one SAR image set including a designated spot within an image region to calculate a reflection intensity obtained by an arbitrary combination of transmission and reception polarizations at the spot; and a rotational SAR data generation unit (e.g. the change detection unit 105, in particular, the rotational SAR data generation unit 151) which uses the polarization rotation processing unit to generate, for each target pixel, rotational SAR data corresponding to at least two different times from an input SAR image set, each of the rotational SAR data including information indicative of a reflection intensity and a phase obtained by a polarization pair determined at the corresponding time, wherein a polarization pair determination unit may use the polarization rotation processing unit to calculate, with respect to each target pixel, a reflection intensity of each of predetermined polarization pair candidates from at least one of the input SAR image sets and determine a polarization pair based on the calculated reflection intensity of each candidate, and a displacement measurement unit may measure, with respect to each target pixel, displacement at a spot corresponding to the pixel based on rotational SAR data of the pixel corresponding to at least two times which is generated by the rotational SAR data generation unit.

The change detection device according to the present invention further includes a rotational SAR image generation unit (e.g. the change detection unit 105, in particular, the rotational SAR image generation unit 153B or the rotational SAR image generation unit 153D) which based on a polarization pair determined by the polarization pair determination unit and an input SAR image set, generates rotational SAR images corresponding to at least two different times, each of the rotational SAR images holding, at least so as to be associated with each target pixel, at least information indicative of a reflection intensity and a phase obtained by a polarization pair determined of the pixel at the corresponding time, wherein using the rotational SAR images corresponding to at least two times which are generated by the rotational SAR image generation unit, the displacement measurement unit may measure, with respect to each target pixel, displacement at a spot corresponding to the pixel.

The change detection device according to the present invention may include a differential interference image generation unit (e.g. the detection result output unit 106) which generates, based on a displacement measurement result obtained by the displacement measurement unit, a differential interference image at least so as to be associated with each target pixel, the differential interference image being an image which holds information indicative of a phase difference caused by a change at a point corresponding to the pixel or image information corresponding to an amount of the phase difference.

Although the present invention has been described with reference to the exemplary embodiments and the examples in the foregoing, the present invention is not limited to the above-described exemplary embodiments. Various modifications those skilled in the art can appreciate can be made in configuration and details of the present invention within the scope of the present invention.

In the above-described exemplary embodiments and examples, the change detection device 1 has a computer system provided therein whose processing procedure is stored in a non-transitory computer-readable medium in a program format, so that reading and executing the program by the computer system can realize the change detection processing. A "computer system" includes hardware such as a CPU, a memory and a peripheral apparatus and software such as an operating system (OS). When a WWW system is used, "computer system" includes home page providing environments and displaying environments.

A program which realizes the change detection function expressed by the above-described flowchart may be stored in a non-transitory computer-readable medium and be read and executed by the computer system. A "non-transitory computer-readable medium" implies a writable non-volatile memory such as a flexible disk, a magneto-optical disk, a ROM or a flash memory, a portable recording medium such as a CD-ROM, and a storage device such as a hard disk built in a computer system.

The above-described program may realize a part of the change detection function according to the present invention. Alternatively, the above-described program may be a differential program (or differential file) which realizes the functions of the present invention in combination with a program already recorded in the computer system.

[Industrial Applicability]

Not limited to such an application for change detection or for using PS-InSAR, the present invention can be suitably used for any application that uses a phase change at a certain point based on information indicative of a reflection intensity and a phase in scattered waves of radio waves at the point.

[Reference signs List]

| | |
|---|---|
| 1 | Change detection device |
| 2 | Flying body |
| 3 | Synthetic aperture radar |
| 4 | Field of vision for image capturing |
| 101 | SAR image set input unit |
| 102 | Optimum polarization pair detection unit |
| 103 | Measuring point information storage unit |
| 104 | Polarization rotation processing unit |
| 105, 105A, 105B, 105C, 105D | Change detection unit |
| 106 | Detection result output unit |
| 151 | Rotational SAR data generation unit |
| 152A, 152B, 152C | Displacement measurement unit |
| 153B, 153D | Rotational SAR image generation unit |
| 501 | SAR image set input unit |
| 502 | Polarization pair determination unit |
| 503 | Displacement measurement unit |

**Claims**

1. A change detection device (1) comprising:

   a SAR image set input unit (101, 501) which, so as to be associated with each of target pixels corresponding to a resolution cell within a field of vision for image capturing (4) including a specific region, inputs at least two SAR image sets each holding at least information indicative of a reflection intensity and a phase, the information being generated from observation data formed of four basic polarization pairs, i.e. an HH polarization, an HV polarization, a VH polarization and a VV polarization which are combinations of transmission and reception polarizations observed by a synthetic aperture radar (3) at generally the same time;
   a polarization pair determination unit (102, 502) which determines with respect to each of the target pixels a polarization pair whose reflection intensity is not less than a predetermined value or the highest value from among polarization pairs by using at least one SAR image set among the at least two SAR image sets; and

a displacement measurement unit (152A, 152B, 152C, 503) which measures displacement at a spot corresponding to a target pixel based on a polarization pair determined by the polarization pair determination unit (102, 502) and the at least one SAR image set of the at least two SAR image sets.

2. The change detection device (1) according to claim 1, wherein the polarization pair determination unit (102, 502) determines with respect to each of the target pixels a polarization pair whose reflection intensity is not less than a predetermined value or the highest value from among predetermined polarization pair candidates.

3. The change detection device (1) according to claim 2, wherein polarization pair candidates are four kinds, an HH polarization, an, HV polarization, a VH polarization and a VV polarization.

4. The change detection device (1) according to claim 2, wherein polarization pair candidates are a set of pairs each including a transmission polarization having a polarization rotation angle of any of 0° to 180° and a reception polarization having a polarization rotation angle of any of 0° to 180°.

5. The change detection device (1) according to any one of claims 1 to 4, comprising:

a polarization rotation processing unit (104) which uses at least one SAR image set including a designated spot within an image region to calculate a reflection intensity obtained by an arbitrary combination of transmission and reception polarizations at the spot; and
a rotational SAR data generation unit (151) which uses the polarization rotation processing unit (104) to generate, for each of target pixels, rotational SAR data corresponding to at least two different times from an input SAR image set, each of the rotational SAR data including information indicative of a reflection intensity and a phase obtained by a determined polarization pair of the pixel at each of the corresponding times, wherein
the polarization pair determination unit (102, 502) uses the polarization rotation processing unit (104) to calculate, with respect to each of the target pixels, a reflection intensity of each of predetermined polarization pair candidates from at least one of the input SAR image sets and determine a polarization pair based on the calculated reflection intensity of each candidate, and
the displacement measurement unit (152A, 152B, 152C, 503) measures, with respect to each of the target pixels, displacement at a spot corresponding to the pixel based on rotational SAR data of the pixel corresponding to at least two times which is generated by the rotational SAR data generation unit (151).

6. The change detection device (1) according to claim 5, comprising:

a rotational SAR image generation unit (153B, 153D) which based on a polarization pair determined by the polarization pair determination unit (102, 502) and an input SAR image set, generates rotational SAR images corresponding to at least two different times, each of the rotational SAR images holding, at least so as to be associated with each of the target pixels, at least information indicative of a reflection intensity and a phase obtained by a determined polarization pair of the pixel at the corresponding time, wherein
using the rotational SAR images corresponding to at least two times which are generated by the rotational SAR image generation unit (153B, 153D), the displacement measurement unit (152A, 152B, 152C, 503) measures, with respect to each of the target pixels, displacement at a spot corresponding to the pixel.

7. The change detection device (1) according to any one of claims 1 to 6, comprising a differential interference image generation unit which generates, based on a displacement measurement result obtained by the displacement measurement unit (152A, 152B, 152C, 503), a differential interference image at least so as to be associated with each of target pixels, the differential interference image being an image which holds information indicative of a phase difference caused by a change at a point corresponding to the pixel or image information corresponding to an amount of the phase difference.

8. A change detection method comprising the steps of:

so as to be associated with each of target pixels corresponding to a resolution cell within a field of vision for image capturing (4) including a specific region, inputting at least two SAR image sets each holding at least information indicative of a reflection intensity and a phase, the information being generated from observation data formed of four basic polarization pairs, i.e. an HH polarization, an HV polarization, a VH polarization and a VV polarization which are combinations of transmission and reception polarizations observed by a synthetic aperture radar (3) at generally the same time;

determining with respect to each of the target pixels a polarization pair whose reflection intensity is not less than a predetermined value or the highest value from among polarization pairs by using at least one SAR image set among the at least two SAR image sets; and

measuring displacement at a spot corresponding to a target pixel based on a determined polarization pair and the at least one SAR image set of the at least two SAR image sets.

9. A non-transitory computer-readable medium which records a program, the program causing a computer to execute:

the SAR image set input processing of inputting, so as to be associated with each of target pixels corresponding to a resolution cell within a field of vision for image capturing (4) including a specific region, at least two SAR image sets each holding at least information indicative of a reflection intensity and a phase, the information being generated from observation data formed of four basic polarization pairs, i.e. an HH polarization, an HV polarization, a VH polarization and a VV polarization which are combinations of transmission and reception polarizations observed by a synthetic aperture radar (3) at generally the same time;

the polarization pair determination processing of determining with respect to each of the target pixels a polarization pair whose reflection intensity is not less than a predetermined value or the highest value from among polarization pairs by using at least one SAR image set among the at least two SAR image sets; and

the displacement measurement processing of measuring displacement at a spot corresponding to a target pixel based on a determined polarization pair and the at least one SAR image set of the at least two SAR image sets.

**Patentansprüche**

1. Veränderungsdetektionsvorrichtung (1), die aufweist:

eine SAR-Bildsatz-Eingabeeinheit (101, 501) die, um mit jeweils Zielpixeln verknüpft zu werden, die einer Auflösungszelle innerhalb eines Sichtfelds zur Bilderfassung (4) entsprechen, das einen spezifischen Bereich umfasst, mindestens zwei SAR-Bildsätze eingibt, die jeweils mindestens Informationen enthalten, die eine Reflexionsintensität und eine Phase anzeigen, wobei die Informationen aus Beobachtungsdaten erzeugt werden, die aus vier grundlegenden Polarisationspaaren gebildet werden, d.h. einer HH-Polarisation, einer HV-Polarisation, einer VH-Polarisation und einer VV-Polarisation, die Kombinationen von Sende- und Empfangspolarisationen sind, die im Wesentlichen gleichzeitig durch ein Radar (3) mit synthetischer Apertur beobachtet werden;

eine Polarisationspaarbestimmungseinheit (102, 502), die bezüglich jedem der Zielpixel ein Polarisationspaar bestimmt, dessen Reflexionsintensität nicht kleiner als ein vorgegebener Wert oder der höchste Wert aus Polarisationspaaren ist, durch Verwenden von mindestens einem SAR-Bildsatz aus den mindestens zwei SAR-Bildsätzen; und

eine Verschiebungsmesseinheit (152A, 152B, 152C, 503), die die Verschiebung an einem Fleck, der einem Zielpixel entspricht, beruhend auf einem Polarisationspaar, das durch die Polarisationspaarbestimmungseinheit (102, 502) bestimmt wird, und dem mindestens einen SAR-Bildsatz der mindestens zwei SAR-Bildsätze misst.

2. Veränderungsdetektionsvorrichtung (1) nach Anspruch 1, wobei die Polarisationspaarbestimmungseinheit (102, 502) bezüglich jedem der Zielpixel ein Polarisationspaar bestimmt, dessen Reflexionsintensität nicht kleiner als ein vorgegebener Wert ist oder der höchste Wert aus vorgegebenen Polarisationspaarkandidaten ist.

3. Veränderungsdetektionsvorrichtung (1) nach Anspruch 2, wobei die Polarisationspaarkandidaten auf vier Arten bestehen, einer HH-Polarisation, einer HV-Polarisation, einer VH-Polarisation und einer VV-Polarisation.

4. Veränderungsdetektionsvorrichtung (1) nach Anspruch 2, wobei die Polarisationspaarkandidaten ein Satz von Paaren sind, die jeweils eine Sendepolarisation, die irgendeinen Polarisationsdrehungswinkel zwischen 0° und 180° aufweist, und eine Empfangspolarisation aufweisen, die irgendeinen Polarisationsdrehungswinkel zwischen 0° und 180° aufweist.

5. Veränderungsdetektionsvorrichtung (1) nach einem der Ansprüche 1 bis 4, die aufweist:

eine Polarisationsdrehungsverarbeitungseinheit (104), die mindestens einen SAR-Bildsatz verwendet, der einen festgelegten Fleck innerhalb eines Bildbereichs umfasst, um eine Reflexionsintensität zu berechnen, die durch eine beliebige Kombination von Sende- und Empfangspolarisationen am Fleck erhalten wird; und

eine Einheit (151) zur Erzeugung von Drehungs-SAR-Daten, die die Polarisationsdrehungsverarbeitungseinheit (104) verwendet, um für jedes der Zielpixel Drehungs-SAR-Daten, die mindestens zwei unterschiedlichen Zeiten entsprechen, aus einem Eingangs-SAR-Bildsatz zu erzeugen, wobei jede der Drehungs-SAR-Daten Informationen enthält, die eine Reflexionsintensität und eine Phase anzeigen, die durch ein bestimmtes Polarisationspaar des Pixels zu jeder der entsprechenden Zeiten erhalten werden, wobei die Polarisationspaarbestimmungseinheit (102, 502) die Polarisationsdrehungsverarbeitungseinheit (104) verwendet, um bezüglich jedem der Zielpixel eine Reflexionsintensität von jeweils vorgegebenen Polarisationspaarkandidaten aus mindestens einem der Eingangs-SAR-Bildsätze zu berechnen und eine Polarisationspaar beruhend auf der berechneten Reflexionsintensität jedes Kandidaten zu bestimmen, und

die Verschiebungsmesseinheit (152A, 152B, 152C, 503) bezüglich jedem der Zielpixel eine Verschiebung an einem Fleck, der dem Pixel entspricht, beruhend auf Drehungs-SAR-Daten des Pixels misst, die mindestens zwei Zeiten entsprechen, die durch die Einheit (151) zur Erzeugung von Drehungs-SAR-Daten erzeugt werden.

6. Veränderungsdetektionsvorrichtung (1) nach Anspruch 5, die aufweist:

eine Drehungs-SAR-Bild-Erzeugungseinheit (153B, 153D), die beruhend auf einem Polarisationspaar, das durch die Polarisationspaarbestimmungseinheit (102, 502) bestimmt wird, und einem Eingangs-SAR-Bildsatz Drehungs-SAR-Bilder erzeugt, die mindestens zwei unterschiedlichen Zeiten entsprechen, wobei jedes der Drehungs-SAR-Bilder, um mindestens mit jeweils Zielpixeln verknüpft zu werden, mindestens Informationen enthält, die eine Reflexionsintensität und eine Phase anzeigen, die durch ein bestimmtes Polarisationspaar des Pixels zu entsprechenden Zeit erhalten werden, wobei unter Verwendung der Drehungs-SAR-Bilder, die mindestens zwei Zeiten entsprechen, die durch die Drehungs-SAR-Bild-Erzeugungseinheit (153B, 153D) erzeugt werden, die Verschiebungsmesseinheit (152A, 152B, 152C, 503) bezüglich jedem der Zielpixel eine Verschiebung an einem Fleck misst, der dem Pixel entspricht.

7. Veränderungsdetektionsvorrichtung (1) nach einem der Ansprüche 1 bis 6, die eine Einheit zur Erzeugung eines Differentialinterferenzbilds aufweist, die beruhend auf einem Verschiebungsmessergebnis, das durch die Verschiebungsmesseinheit (152A, 152B, 152C, 503) erhalten wird, ein Differentialinterferenzbild erzeugt, um mindestens mit jeweils Zielpixeln verknüpft zu werden, wobei das Differentialinterferenzbild ein Bild ist, das Informationen enthält, die eine Phasendifferenz anzeigen, die durch eine Veränderung an einem Punkt verursacht wird, der dem Pixel oder Bildinformationen entspricht, die einem Betrag der Phasendifferenz entsprechen.

8. Veränderungsdetektionsverfahren, das die Schritte aufweist:

um mit jeweils Zielpixeln verknüpft zu werden, die einer Auflösungszelle innerhalb eines Sichtfelds zur Bilderfassung (4) entsprechen, das einen spezifischen Bereich umfasst, Eingeben von mindestens zwei SAR-Bildsätzen, die jeweils mindestens Informationen enthalten, die eine Reflexionsintensität und eine Phase anzeigen, wobei die Informationen aus Beobachtungsdaten erzeugt werden, die aus vier grundlegenden Polarisationspaaren gebildet werden, d.h. einer HH-Polarisation, einer HV-Polarisation, einer VH-Polarisation und einer VV-Polarisation, die Kombinationen von Sende- und Empfangspolarisationen sind, die im Wesentlichen gleichzeitig durch ein Radar (3) mit synthetischer Apertur beobachtet werden;
Bestimmen bezüglich jedem der Zielpixel eines Polarisationspaars, dessen Reflexionsintensität nicht kleiner als ein vorgegebener Wert oder der höchste Wert aus Polarisationspaaren ist, durch Verwenden von mindestens einem SAR-Bildsatz aus den mindestens zwei SAR-Bildsätzen; und
Messen einer Verschiebung an einem Fleck, der einem Zielpixel entspricht, beruhend auf einem bestimmten Polarisationspaar und dem mindestens einen SAR-Bildsatz der mindestens zwei SAR-Bildsätze.

9. Nichtflüchtiges computerlesbares Medium, das ein Programm aufzeichnet, wobei das Programm einen Computer veranlasst, auszuführen:

eine SAR-Bildsatz-Eingabeverarbeitung zum Eingeben, um mit jeweils Zielpixeln verknüpft zu werden, die einer Auflösungszelle innerhalb eines Sichtfelds zur Bilderfassung (4) entsprechen, das einen spezifischen Bereich umfasst, von mindestens zwei SAR-Bildsätzen, die jeweils mindestens Informationen enthalten, die eine Reflexionsintensität und eine Phase anzeigen, wobei die Informationen aus Beobachtungsdaten erzeugt werden, die aus vier grundlegenden Polarisationspaaren gebildet werden, d.h. einer HH-Polarisation, einer HV-Polarisation, einer VH-Polarisation und einer VV-Polarisation, die Kombinationen von Sende- und Empfangspolarisationen sind, die im Wesentlichen gleichzeitig durch ein Radar (3) mit synthetischer Apertur beobachtet werden;
eine Polarisationspaar-Bestimmungsverarbeitung zum Bestimmen bezüglich jedem der Zielpixel eines Polarisationspaars, dessen Reflexionsintensität nicht kleiner als ein vorgegebener Wert oder der höchste Wert aus Polarisationspaaren ist, durch Verwenden von mindestens einem SAR-Bildsatz aus den mindestens zwei SAR-Bildsätzen; und

eine Verschiebungsmessungsverarbeitung zum Messen einer Verschiebung an einem Fleck, der einem Zielpixel entspricht, beruhend auf einem bestimmten Polarisationspaar und dem mindestens einen SAR-Bildsatz der mindestens zwei SAR-Bildsätze.

**Revendications**

1. Dispositif détecteur de changement (1), comprenant :

   une unité d'entrée d'ensemble d'images SAR (101, 501) laquelle entre, de manière à les associer à chacun des pixels cibles correspondant à une cellule de résolution à l'intérieur d'un champ de vision de capture d'image (4) comprenant une zone spécifique, au moins deux ensembles d'images SAR contenant chacun au moins une information indicative d'une intensité de réflexion et d'une phase, ladite information étant générée à partir de données d'observation formées de quatre paires de polarisation de base, en l'occurrence de polarisation HH, polarisation HV, polarisation VH et polarisation VV qui sont des combinaisons de polarisations de transmission et de réception observées par un radar à synthèse d'ouverture (3) sensiblement au même moment ;
   une unité de détermination de paire de polarisation (102, 502) déterminant par rapport chacun des pixels cibles une paire de polarisation dont l'intensité de réflexion n'est pas inférieure à une valeur prédéfinie ou présente la valeur maximale parmi les paires de polarisation au moyen d'au moins un ensemble d'images SAR parmi les au moins deux ensembles d'images SAR ; et
   une unité de mesure de déplacement (152A, 152B, 152C, 503) mesurant le déplacement sur un point correspondant à un pixel cible sur la base d'une paire de polarisation déterminée par l'unité de détermination de paire de polarisation (102, 502) et dudit au moins un ensemble d'images SAR des au moins deux ensembles d'images SAR.

2. Dispositif détecteur de changement (1) selon la revendication 1, où l'unité de détermination de paire de polarisation (102, 502) détermine par rapport à chacun des pixels cibles une paire de polarisation dont l'intensité de réflexion n'est pas inférieure à une valeur prédéfinie ou présente la valeur maximale parmi des paires de polarisation prédéfinies candidates.

3. Dispositif détecteur de changement (1) selon la revendication 2, où les paires de polarisation candidates sont de quatre sortes, à polarisation HH, polarisation HV, polarisation VH et polarisation VV.

4. Dispositif détecteur de changement (1) selon la revendication 2, où les paires de polarisation candidates sont un ensemble de paires présentant chacune une polarisation de transmission ayant un angle de rotation de polarisation compris entre 0° et 180° et une polarisation de réception ayant un angle de rotation de polarisation compris entre 0° et 180°.

5. Dispositif détecteur de changement (1) selon l'une des revendications 1 à 4, comprenant :

   une unité de traitement de rotation de polarisation (104) recourant à au moins un ensemble d'images SAR comprenant un point désigné à l'intérieur d'une zone d'image pour calculer une intensité de réflexion obtenue par combinaison arbitraire des polarisations de transmission et de réception sur le point ; et
   une unité de génération de données SAR de rotation (151) recourant à l'unité de traitement de rotation de polarisation (104) pour générer, pour chacun des pixels cibles, des données SAR de rotation correspondant aux au moins deux moments différents à partir d'un ensemble d'images SAR entré, chacune des données SAR de rotation comprenant une information indicative d'une intensité de réflexion et d'une phase obtenue par une paire de polarisation du pixel déterminée à chacun des moments correspondants, où l'unité de détermination de paire de polarisation (102, 502) recourt à l'unité de traitement de rotation de polarisation (104) pour calculer, par rapport à chacun des pixels cibles, une intensité de réflexion de chacune des paires de polarisation candidates prédéfinies à partir d'au moins un des ensembles d'images SAR entrés et déterminer une paire de polarisation sur la base de l'intensité de réflexion calculée de chaque candidat, et
   l'unité de mesure de déplacement (152A, 152B, 152C, 503) mesure, par rapport à chacun des pixels cibles, le déplacement sur un point correspondant au pixel sur la base des données SAR de rotation du pixel correspondant aux au moins deux moments qui sont générées par l'unité de génération de données SAR de rotation (151).

**6.** Dispositif détecteur de changement (1) selon la revendication 5, comprenant :

une unité de génération d'images SAR de rotation (153B, 153D) qui génère, sur la base d'une paire de polarisation déterminée par l'unité de détermination de paire de polarisation (102, 502) et d'un ensemble d'images SAR entré, des images SAR de rotation correspondant aux au moins deux moments différents, chacune des images SAR de rotation contenant, au moins de manière à être associée à chacun des pixels cibles, au moins une information indicative d'une intensité de réflexion et d'une phase obtenue par une paire de polarisation du pixel déterminée au moment correspondant, où

au moyen des images SAR de rotation correspondant aux au moins deux moments générées par l'unité de génération d'images SAR de rotation (153B, 153D), l'unité de mesure de déplacement (152A, 152B, 152C, 503) mesure, par rapport à chacun des pixels cibles, le déplacement sur un point correspondant au pixel.

**7.** Dispositif détecteur de changement (1) selon l'une des revendications 1 à 6, comprenant une unité de génération d'image d'interférence différentielle qui génère, sur la base d'un résultat de mesure de déplacement obtenu par l'unité de mesure de déplacement (152A, 152B, 152C, 503), une image d'interférence différentielle au moins de manière à être associée à chacun des pixels cibles, ladite image d'interférence différentielle étant une image contenant une information indicative d'une différence de phase due à un changement sur un point correspondant au pixel ou une information d'image correspondant à une valeur de la différence de phase.

**8.** Procédé de détection de changement, comprenant les étapes suivantes :

entrée, de manière à les associer à chacun des pixels cibles correspondant à une cellule de résolution à l'intérieur d'un champ de vision de capture d'image (4) comprenant une zone spécifique, d'au moins deux ensembles d'images SAR contenant chacun au moins une information indicative d'une intensité de réflexion et d'une phase, ladite information étant générée à partir de données d'observation formées de quatre paires de polarisation de base, en l'occurrence de polarisation HH, polarisation HV, polarisation VH et polarisation VV qui sont des combinaisons de polarisations de transmission et de réception observées par un radar à synthèse d'ouverture (3) sensiblement au même moment ;

détermination par rapport à chacun des pixels cibles d'une paire de polarisation dont l'intensité de réflexion n'est pas inférieure à une valeur prédéfinie ou présente la valeur maximale parmi les paires de polarisation au moyen d'au moins un ensemble d'images SAR parmi les au moins deux ensembles d'images SAR ; et

mesure du déplacement sur un point correspondant à un pixel cible sur la base d'une paire de polarisation déterminée et dudit au moins un ensemble d'images SAR des au moins deux ensembles d'images SAR.

**9.** Support non transitoire d'enregistrement d'un programme lisible par ordinateur, ledit programme provoquant l'exécution par un ordinateur :

d'un traitement d'entrée d'ensembles d'images SAR, de manière à associer à chacun des pixels cibles correspondant à une cellule de résolution à l'intérieur d'un champ de vision de capture d'image (4) comprenant une zone spécifique, au moins deux ensembles d'images SAR contenant chacun au moins une information indicative d'une intensité de réflexion et d'une phase, ladite information étant générée à partir de données d'observation formées de quatre paires de polarisation de base, en l'occurrence de polarisation HH, polarisation HV, polarisation VH et polarisation VV qui sont des combinaisons de polarisations de transmission et de réception observées par un radar à synthèse d'ouverture (3) sensiblement au même moment ;

d'un traitement de détermination par rapport à chacun des pixels cibles d'une paire de polarisation dont l'intensité de réflexion n'est pas inférieure à une valeur prédéfinie ou présente la valeur maximale parmi les paires de polarisation au moyen d'au moins un ensemble d'images SAR parmi les au moins deux ensembles d'images SAR ; et

un traitement de mesure de déplacement sur un point correspondant à un pixel cible sur la base d'une paire de polarisation déterminée et dudit au moins un ensemble d'images SAR des au moins deux ensembles d'images SAR.

# Fig.1

# Fig.2

CHANGE DETECTION DEVICE                                    1

101
SAR IMAGE SET
INPUT UNIT

102
OPTIMUM
POLARIZATION
PAIR DETECTION
UNIT

103
MEASURING POINT
INFORMATION
STORAGE UNIT

105
CHANGE
DETECTION UNIT

106
DETECTION
RESULT OUTPUT
UNIT

104
POLARIZATION
ROTATION
PROCESSING UNIT

# Fig.3

SAR IMAGE SET SERIES

SAR IMAGE SET($t_1$)  SAR IMAGE SET($t_2$)  SAR IMAGE SET($t_2$)

HH  HH  HH

HV  HV  HV

...

VH  VH  VH

VV  VV  VV

$t_1$  $t_2$  $t_n$  OBSERVATION TIME

: SAR IMAGES CAPTURED TARGETTING THE SAME PLACE

# Fig.4

# Fig.5

105A

CHANGE DETECTION UNIT

151

ROTATIONAL SAR
DATA GENERATION
UNIT

152A

DISPLACEMENT
MEASUREMENT
UNIT

# Fig.6

105B

CHANGE DETECTION UNIT

151

ROTATIONAL SAR
DATA GENERATION
UNIT

153B

ROTATIONAL SAR
IMAGE GENERATION
UNIT

152B

DISPLACEMENT
MEASUREMENT
UNIT

# Fig.7

START

DETERMINE REGION OF INTEREST

S101

INPUT SAR IMAGE SET SERIES OF REGION OF INTEREST

S102

DESIGNATE MEASURING POINT

S103

SELECT ONE PAIR FROM INPUT SAR IMAGE SET SERIES TO OBTAIN OPTIMUM POLARIZATION PAIR OF TARGET PIXEL

S104

GENERATE ROTATIONAL SAR DATA SERIES OF TARGET PIXEL BASED ON OPTIMUM POLARIZATION PAIR AND SAR IMAGE SET AT DESIGNATED TIME WHICH IS INCLUDED IN SAR IMAGE SET SERIESGE SET SERIES

S105

MEASURE DISPLACEMENT AT MEASURING POINT BY EXECUTING PS-INSAR PROCESSING USING ROTATIONAL SAR DATA SERIES OF TARGET PIXEL

S106

OUTPUT RESULT

S107

END

# Fig.8

```
                    ┌─────────────┐
                    │    START    │
                    └─────────────┘
                           │
                           ▼
┌─────────────────────────────────────────────────────────────┐
│              DETERMINE REGION OF INTEREST                     │
└─────────────────────────────────────────────────────────────┘
                           │               ⌐S101
                           ▼
┌─────────────────────────────────────────────────────────────┐
│        INPUT SAR IMAGE SET SERIES OF REGION OF INTEREST      │
└─────────────────────────────────────────────────────────────┘
                           │               ⌐S102
                           ▼
┌─────────────────────────────────────────────────────────────┐
│  OBTAIN OPTIMUM POLARIZATION PAIR WITH RESPECT TO EACH PIXEL │
│  INCLUDED IN REGION OF INTEREST USING SAR IMAGE SET INCLUDED │
│             IN INPUT SAR IMAGE SET SERIES                    │
└─────────────────────────────────────────────────────────────┘
                           │               ⌐S201
                           ▼
┌─────────────────────────────────────────────────────────────┐
│  GENERATE ROTATIONAL SAR DATA SERIES OF EACH TARGET PIXEL    │
│  BASED ON OPTIMUM POLARIZATION PAIR AND SAR IMAGE SET AT     │
│  DESIGNATED TIME WHICH IS INCLUDED IN SAR IMAGE SET SERIES   │
└─────────────────────────────────────────────────────────────┘
                           │               ⌐S202
                           ▼
┌─────────────────────────────────────────────────────────────┐
│  MEASURE DISPLACEMENT AT EACH TARGET PIXEL BY INTEGRATING    │
│  AND USING ROTATIONAL SAR DATA SERIES OF EACH TARGET PIXEL   │
│  TO EXECUTE PS-INSAR PROCESSING WITH RESPECT TO EACH TARGET  │
│  PIXEL                                                       │
└─────────────────────────────────────────────────────────────┘
                           │               ⌐S203
                           ▼
┌─────────────────────────────────────────────────────────────┐
│  GENERATE AND OUTPUT DIFFERENTIAL INTERFERENCE IMAGE BASED   │
│  ON INFORMATION INDICATIVE OF DISPLACEMENT OF EACH TARGET    │
│  PIXEL                                                       │
└─────────────────────────────────────────────────────────────┘
                           │               ⌐S204
                           ▼
                    ┌─────────────┐
                    │     END     │
                    └─────────────┘
```

# Fig.9

START

↓

DETERMINE REGION OF INTEREST

S101

↓

INPUT SAR IMAGE SET SERIES OF REGION OF INTEREST

S102

↓

OBTAIN OPTIMUM POLARIZATION PAIR WITH RESPECT TO EACH PIXEL INCLUDED IN REGION OF INTEREST USING SAR IMAGE SET INCLUDED IN INPUT SAR IMAGE SET SERIES

S201

↓

GENERATE ROTATIONAL SAR DATA SERIES OF EACH TARGET PIXEL BASED ON OPTIMUM POLARIZATION PAIR AND SAR IMAGE SET AT DESIGNATED TIME WHICH IS INCLUDED IN SAR IMAGE SET SERIES

S202

↓

INTEGRATE ROTATIONAL SAR DATA OF EACH TARGET PIXEL AT EACH TIME TO GENERATE ROTATIONAL SAR IMAGE CORRESPONDING TO DESIGNATED TIME

S301

↓

GENERATE DIFFERENTIAL INTERFERENCE IMAGE BY EXECUTING PS–INSAR PROCESSING WITH RESPECT TO EACH TARGET PIXEL USING ROTATIONAL SAR IMAGE CORRESPONDING TO DESIGNATED TIME

S302

↓

OUTPUT RESULTT

S303

↓

END

29

# Fig.10

CHANGE DETECTION DEVICE — 5

SAR IMAGE SET INPUT UNIT — 101

OPTIMUM POLARIZATION PAIR DETECTION UNIT — 102

MEASURING POINT INFORMATION STORAGE UNIT — 103

CHANGE DETECTION UNIT — 105

DETECTION RESULT OUTPUT UNIT — 106

# Fig.11

105C

CHANGE DETECTION UNIT

152C

DISPLACEMENT
MEASUREMENT UNIT

# Fig.12

105D

CHANGE DETECTION UNIT

153D

ROTATIONAL SAR IMAGE
GENERATION UNIT

152B

DISPLACEMENT
MEASUREMENT UNIT

# Fig.13

501

SAR IMAGE SET INPUT
UNIT

502

POLARIZATION PAIR
DETERMINATION UNIT

503

DISPLACEMENT
MEASUREMENT UNIT

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001091650 A
- JP 5305985 B
- US 200814735 B
- US 2008232626 A

**Non-patent literature cited in the description**

- **ALESSANDRO FERRETTI ; CLAUDIO PRATI ; FABIO ROCCA.** Nonlinear Subsidence Rate Estimation Using Permanent Scatterers in Differential SAR Interferometry. *IEEE TRANSACTION ON GEOSCIENCE AND REMOTE SENSING,* September 2000, vol. 38 (5
- **ALESSANDRO FERRETTI ; CLAUDIO PRATI ; FABIO ROCCA.** Permanent Scatterers in SAR Interferometry. *IEEE TRANSACTION ON GEOSCIENCE AND REMOTE SENSING,* January 2001, vol. 39 (1
- **TETSUYA JITSUFUCHI.** Feasibility of the Multi Frequency, Full Polarimetric SAR Image Data as a Disaster Observation Technique Verified by Ground Truth Data and Optical Sensor Image Data. *Study Report of National Research Institute for Earth Science and Disaster Prevention,* June 2002, vol. 63